# EUROPÄISCHE PATENTSCHRIFT

(11) **EP 2 781 921 B1**
(45) Veröffentlichungstag und Bekanntmachung des Hinweises auf die Patenterteilung: **11.12.2019**
(21) Anmeldenummer: 13159671.0
(22) Anmeldetag: 18.03.2013
(51) Int. Cl.: B01L 3/00, B01L 9/06, G01N 35/02, G01N 35/04

(54) **Verschlusssystem für Reagenzgefäßaufnahmepositionen in einem automatischen Analysegerät**
Closure system for reagent container mounting positions in an automatic analyzer
Système de fermeture pour des positions de réception de flacons à réactif dans un appareil d'analyse automatique

(43) Veröffentlichungstag der Anmeldung: 24.09.2014
(73) Patentinhaber: Siemens Healthcare Diagnostics Products GmbH, 35041 Marburg (DE)
(72) Erfinder: Wilmes, Hugo, 65812 Bad Soden (DE)

(56) Entgegenhaltungen:
- EP-A1- 0 523 425
- EP-A1- 0 543 638
- EP-A1- 2 371 731
- DE-A1- 10 026 099
- DE-A1-102010 029 136
- FR-A1- 2 734 241
- GB-A- 2 269 583
- GB-A- 2 269 809
- US-A- 4 455 280
- US-A- 4 841 818
- US-B1- 6 866 820

## Beschreibung

Die Erfindung betrifft ein Verschlusssystem für eine Aufnahme für ein Reaktionsgefäß in einem automatischen Analysegerät.

Zahlreiche Nachweis- und Analyseverfahren zur Bestimmung physiologischer Parameter in Körperflüssigkeitsproben wie Blut, Plasma, Serum oder Urin oder in anderen biologischen Proben werden heute automatisiert in entsprechenden Analysegeräten durchgeführt.

Heutige Analysegeräte sind in der Lage, eine Vielzahl verschiedenartiger Nachweisreaktionen und Analysen mit einer Vielzahl von Proben durchzuführen. Gängige Analysegeräte, wie sie im klinischen Labor oder in Blutbanken zum Einsatz kommen, umfassen üblicherweise einen Bereich für die Zuführung von Probengefäßen, die die zu analysierenden Primärproben enthalten. Zur Einspeisung der Probengefäße in das Analysegerät ist üblicherweise ein Transportsystem vorgesehen, das die Probengefäße zunächst zu einer Probenidentifikationseinrichtung transportiert, die probenspezifische Informationen, die auf einem Probengefäß angebracht sind, erfasst und in eine Speichereinheit weiterleitet. Anschließend werden die Probengefäße zu einer Probenentnahmestation transportiert. Mit Hilfe einer Probenpipettiereinrichtung wird dort mindestens ein Aliquot der Probenflüssigkeit aus einem Probengefäß entnommen und in ein Reaktionsgefäß transferiert.

Bei den Reaktionsgefäßen handelt es sich in der Regel um Einwegküvetten, die in einem Küvettenbehälter im Analysegerät vorrätig gehalten werden und die automatisch aus dem Vorratsbehälter in definierte Aufnahmepositionen transferiert werden. Die Reagenzien, die für die Bereitstellung von verschiedenartigen, testspezifischen Reaktionsansätzen erforderlich sind, befinden sich in Reagenzbehältern, die in einer Reagenzstation aufbewahrt werden. Die Reagenzbehälter werden dem Analysegerät entweder automatisch oder manuell zugeführt.

Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten erfolgt vielfach, indem ein Aliquot einer Körperflüssigkeit eines Patienten gleichzeitig oder nacheinander mit einem oder mehreren Testreagenzien im Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weiterleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Die Reaktionsgefäße werden den verschiedenen Messsystemen häufig auf einem kreisrunden Transportrad zugeführt. Ein derartiges Rad ist üblicherweise mit senkrechter Mittelachse in dem automatischen Analysegerät angeordnet und weist entlang seines Außenumfangs eine Vielzahl von Aufnahmen für Reaktionsgefäße auf. Die Reaktionsgefäße sind üblicherweise zylindrisch ausgestaltet und mit ihrer Mittelachse parallel zu der des Rades ausgerichtet. Dadurch können die Reaktionsgefäße in die Aufnahmen von oben eingesetzt werden, mittels Drehung des Rades an einen anderen Ort bewegt und dort wieder entnommen werden.

Je nach Aufenthaltszeit der Reaktionsgefäße in dem Transportrad kann es erforderlich sein, den Inhalt der Reaktionsgefäße vor Verdunstung und äußeren Einflüssen wie z.B. Staub oder Licht zu schützen. Hierzu wird üblicherweise ein Deckel verwendet. Bei der automatisierten Abarbeitung in einem Analysegerät ist es jedoch erforderlich, dass dieser Deckel jederzeit automatisiert geöffnet und wieder geschlossen werden kann, um Reagenzien zuzugeben oder Probenflüssigkeit zu entnehmen. Die Betätigung des Deckels sollte dabei möglichst mit bereits vorhandenen Bewegungsabläufen im Gerät geschehen, so dass kein zusätzlicher technischer Aufwand hinsichtlich einer Positionsbestimmung und der Betätigung des Deckels notwendig wird.

EP0523425A1, EP0543638A1, EP2371731A1 und US4455280A offenbaren verschiedene Verschlusssysteme.

Es ist daher Aufgabe der Erfindung, ein Verschlusssystem für eine Aufnahmeposition für ein Reaktionsgefäß in einem automatischen Analysegerät bereit zu stellen, wobei das Verschlusssystem einerseits ein automatisiertes Öffnen und dichtes Verschließen der jeweiligen Aufnahme erlaubt und andererseits technisch besonders einfach und kostengünstig herzustellen ist.

Diese Aufgabe wird erfindungsgemäß durch den unabhängigen Anspruch 1 gelöst, indem das Verschlusssystem einen an einem Halteelement bewegbar befestigbaren Deckel umfasst, wobei der Deckel eine Öffnung der Aufnahme in einer Geschlossenstellung verschließt und in Offenstellung freigibt. Ferner umfasst das Verschlusssystem ein Rückstellelement, welches derart ausgestaltet ist, dass es abhängig von der Stellung des Deckels eine Rückstellkraft in Richtung der Offenstellung oder der Geschlossenstellung ausübt.

Dies hat den Vorteil, dass eine besonders einfache und kostengünstige Konstruktion eines Verschlusssystems für Reaktionsgefäßaufnahmen gerade hinsichtlich der üblicherweise großen Anzahl von Aufnahmen möglich ist, da die Bewegung des Deckels nicht ausschließlich über eine aktive Ansteuerung durch z.B. Elektromotoren erfolgt, sondern hierfür auf passive mechanische Bauteile zurückgegriffen wird. Hierzu ist ein Rückstellelement vorgesehen, welches den Deckel einerseits in einer Geschlossenstellung fixiert, wodurch beispielsweise auch ein Anpressdruck realisiert werden kann, der zur Abdichtung beiträgt, andererseits den Deckel aber auch in der Offenstellung fixiert, so dass ohne separates Offenhalten des Deckels Proben entnommen oder Reagenzien zugegeben werden können. Weiterhin ist das Rückstellelement so ausgestaltet, dass es abhängig von der Stellung des Deckels in die offene oder geschlossene Stellung zurückstellt. Dies erlaubt eine gewisse Unschärfe hinsichtlich der Betätigung: Es ist nicht mehr notwendig, den Deckel vollständig mittels aktiver Bauteile in eine exakte Stellung zu bringen, sondern es genügt, den Deckel in eine Stellung zu bringen, von der aus er durch das Rückstellelement selbsttätig in die gewünschte offene oder geschlossene Stellung gelangt. Hierdurch ergibt sich eine hohe Flexibilität bei der Konstruktion der Betätigung des Deckels.

Erfindungsgemäß wird die Offenstellung des Deckels durch Drehung um eine Achse um einen vorgegebenen Winkel aus der Geschlossenstellung erreicht. Hierbei ist der Deckel an einem Arm befestigt, der an einer drehbaren Welle befestigt ist. Die Achse, um die der Deckel bewegbar ist, besteht also aus einer Welle, mit der der Deckel verbunden ist.

Dies ermöglicht die erfindungsgemäße Ausgestaltung der beschriebenen zweifach selbstrückstellenden Funktion, indem nämlich ein Nocken so an der Welle angeordnet ist, dass er in der Geschlossenstellung eine senkrechte Kraft auf das Rückstellelement ausübt. Ein Nocken ist ein gerundeter Vorsprung, der die Drehbewegung der Welle mitmacht. Ein oder mehrere Rückstellelemente, z.B. Federn, sind hingegen fixiert an dem Halteelement befestigt, so dass sie die Drehbewegung des Deckels nicht mitmachen. Die Federn sind dabei so angeordnet, dass sie senkrecht auf den Nocken wirken, wenn der Deckel geschlossen ist. Somit wirkt die Federkraft senkrecht auf den Nocken. Wird der Nocken durch Drehung des Deckels aus der Offenstellung geneigt, wird der gerundete Vorsprung des Nockens auf die Feder zu bewegt, so dass die Kraft ansteigt. Hierdurch ergibt sich die selbstrückstellende Wirkung. Die Rundung des Nockens bestimmt die Rückstelleigenschaften, d.h. ab welchem Drehwinkel die Rückstellung in die offene oder in die geschlossene Stellung erfolgt.

Es wird nur ein einziges Rückstellelement benötigt, welches die Rückstellkraft für beide Stellungen, d.h. offen und geschlossen ausübt.

Erfindungsgemäß umfasst das Verschlusssystem weiterhin einen Hebel, der an mindestens einem Ende der Welle angebracht ist und sich beiderseits der Achse radial erstreckt. Der Hebel erlaubt in besonders einfacher Weise eine Betätigung des Deckels. Der Hebel wiederum kann beispielsweise durch einen Bolzen betätigt werden, der gegen das Ende des Hebels gedrückt wird. Der Druck bewirkt eine Drehbwegung der Welle und damit eine Drehbewegung des Deckels. Sobald die Drehung denjenigen Drehwinkel überschritten hat, in dem der Nocken umschnappt, d.h. der die Grenze zwischen Rückstellung in die offene oder geschlossene Stellung bestimmt, bewegt sich der Deckel selbsttätig in die jeweils andere Position, ohne dass durch den betätigenden Bolzen eine vollständige Führung in die Endposition erfolgen muss.

Erfindungsgemäß ist das Rückstellelement als Biegestabfeder ausgelegt. Eine derartige Biegestabfeder besteht aus einem geraden Stab, dessen eines Ende fixiert und dessen anderes Ende frei schwebend ist. Durch die Elastizität des Stabes ist eine Bewegung des freien Endes möglich, das jedoch stets wieder in die gerade Position zurückkehrt. Das freie Ende wird so angeordnet, dass es eine Rückstellkraft auf den Nocken ausübt. Eine derartige Ausgestaltung hat vielfache Vorteile: Einerseits ermöglicht die Ausdehnung des Biegestabs eine flächige Krafteinwirkung auf die sich drehende Oberfläche des Nockens, die für die automatische Rückstellung notwendig ist. Andererseits kann der Biegestab direkt z.B. im Spritzgussverfahren gefertigt werden. Ein separates Anbringen von Metallfedern oder ähnlichem ist nicht notwendig, was den Herstellungsprozess vereinfacht.

Vorteilhafterweise beträgt der Winkel der Drehung zwischen offener und geschlossener Stellung 90°. Durch die sich dadurch ergebende Symmetrie vereinfacht sich die Konstruktion des Verschlusssystems. Weiterhin wird die Betätigung des Deckelmechanismus vereinfacht, da eine Drehung beispielsweise des beschriebenen Hebels bzw. eines Arms des Hebels lediglich um 90° notwendig ist. Dadurch kann die Betätigung lediglich durch eine einfache eindimensionale Bewegung in einer Richtung erfolgen.

Dabei ist der Hebel vorteilhafterweise derart angeordnet, dass er mit einer Einführ- und Entnahmerichtung der Aufnahme einen Winkel von 45° bildet. Hierdurch kann die Öffnung und Schließung des Deckels durch eine Bewegung in Richtung der Einführ- und Entnahmerichtung bewirkt werden. Dadurch kann das Öffnen und Schließen des Deckels direkt in den Zugriff auf die jeweilige Aufnahme integriert werden, z.B. durch einen entsprechend positionierten Bolzen an einer Zugriffseinrichtung wie einer automatisierten Pipette oder einem Greifarm.

Ein weiterer Gegenstand der vorliegenden Erfindung ist eine Haltevorrichtung mit einer Vielzahl von Aufnahmen für Reaktionsgefäße, wobei an jeder Aufnahme ein erfindungsgemäßes Verschlusssystem angeordnet ist. Vorzugsweise umfasst die Haltevorrichtung ein Halteelement für das erfindungsgemäße Verschlusssystem. Das Halteelement kann beispielsweise im Spritzgussverfahren gefertigt werden und an den Aufnahmen zu befestigende Teile der Verschlusssysteme bereits enthalten, so z.B. die Biegestabfedern und die Lager für den drehbaren Deckel. Hierdurch vereinfacht sich die Herstellung erheblich.

Noch ein weiterer Gegenstand der vorliegenden Erfindung ist ein automatisches Analysegerät mit einer Haltevorrichtung mit einer Vielzahl von Aufnahmen für Reaktionsgefäße, wobei an jeder Aufnahme ein erfindungsgemäßes Verschlusssystem angeordnet ist. Ferner umfasst das Analysegerät eine Zugriffsvorrichtung, wie z.B. einen Greifer für die Reaktionsgefäße und/oder eine Pipettiervorrichtung mit einer Hohlnadel, wobei die Zugriffsvorrichtung zusätzlich einen Bolzen zur Betätigung eines erfindungsgemäßen Verschlusssystems aufweist.

Die mit der Erfindung erzielten Vorteile bestehen insbesondere darin, dass durch die zweifache automatische Rückstellung in eine Offen- und eine Geschlossenstellung in einem Verschlusssystem für Reagenzgefäßaufnahmepositionen eine besonders einfache Betätigung des Verschlussmechanismus erreicht wird und somit ein kostengünstiger und technisch einfacher Verschluss der Aufnahmepositionen für Reaktionsgefäße in einem automatischen Analysegerät ermöglicht wird.

Die Erfindung wird anhand einer Zeichnung näher erläutert. Darin zeigen:
- FIG 1: ein Verschlusssystem für eine Aufnahme für ein Reaktionsgefäß auf einem Segment eines Transportrades,
- FIG 2: das Verschlusssystem bei Betätigung durch einen Bolzen in geschlossener Stellung,
- FIG 3: das Verschlusssystem bei Betätigung durch einen Bolzen in offener Stellung,
- FIG 4: ein Halteelement für eine Mehrzahl von Verschlusssystemen,
- FIG 5: das Segment des Transportrades,
- FIG 6: eine Vorderansicht des Deckels des Verschlusssystems, und
- FIG 7: eine Rückansicht des Deckels des Verschlusssystems.

Gleiche Teile sind in alle Figuren mit denselben Bezugszeichen versehen.

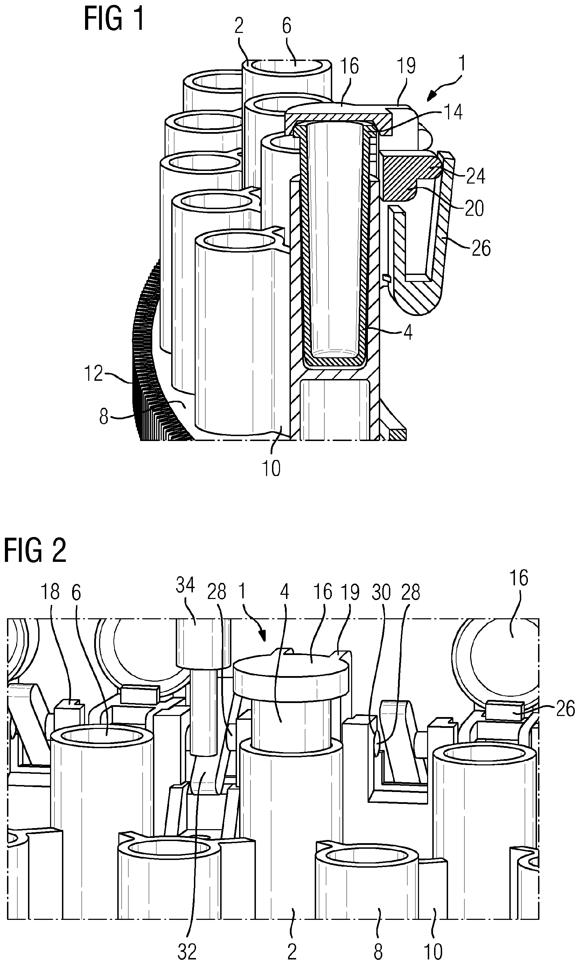

FIG 1 zeigt ein Verschlusssystem 1 für eine Aufnahme 2 für ein Reaktionsgefäß 4 in einem automatischen Analysegerät im Schnitt. Mehrere Aufnahmen 2 mit jeweils einer Öffnung 6 sind dabei auf einem Segment 8 eines Transportrades in zwei Reihen angeordnet, wobei der Übersichtlichkeit halber lediglich eine Aufnahme 2 mit einem Bezugszeichen versehen ist. Das Segment 8 ist kreisbogenförmig ausgestaltet, wobei eine erste Reihe der Aufnahmen 2 auf einem ersten Kreisbogen angeordnet ist. Die übrigen Aufnahmen 2 sind auf einem zweiten konzentrischen Kreisbogen mit größerem Radius, d.h. weiter außen angeordnet.

Die Aufnahmen 2 sind im Wesentlichen als nach oben offene Hohlzylinder ausgestaltet, wobei die Innenseite schwach konisch geformt ist, so dass die Einführ- und Entnahmerichtung entlang der Zylinderachse verläuft. Die auf dem weiter innen liegenden Kreisbogen angeordneten Aufnahmen 2 sind höher als die weiter außen angeordneten Aufnahmen 2. Die Aufnahmen 2 sind zick-zack-förmig mit Stegen 10 verbunden, die die Stabilität erhöhen.

Das Segment 8 ist aus einem Kunststoff im Spritzgussverfahren gefertigt. Am Außenradius des Segments 8 ist ein Zahnkranz 12 angeordnet, der somit an der Außenseite des durch die Segmente 8 gebildeten Transportrads für den Transport von Reaktionsgefäßen verläuft. In diesen Zahnkranz greift ein nicht näher gezeigtes Zahnrad ein, welches über einen Antrieb bewegt wird. Der Antrieb wird von der Steuereinheit des nicht näher gezeigten automatischen Analysegeräts gesteuert, so dass die Steuereinheit damit die Kontrolle über die Positionierung des Transportrads gewinnt.

Der Schnitt in FIG 1 verläuft durch eine der Aufnahmen 2. In die Öffnung 6 der im Schnitt gezeigten Aufnahme 2 ist ein Reaktionsgefäß 4 eingesetzt. Das Reaktionsgefäß 4 ist als nach oben offener Konus ausgestaltet, dessen oberer Rand 14 nach außen gewölbt ist und dessen Außenform der Innenseite der Aufnahme 2 angeformt ist, so dass das Reaktionsgefäß 4 stabil in der Aufnahme 2 sitzt. Das Reaktionsgefäß 4 wird dabei jedoch nicht vollständig von der Aufnahme 2 umschlossen, sondern ist höher als die Aufnahme 2, so dass es aus der Öffnung 6 hervorsteht.

Die in der FIG 1 im Schnitt dargestellte Aufnahme 2 ist dort als einzige mit einem vollständigen Verschlusssystem 1 versehen. Dieses umfasst einen Deckel 16, der ebenfalls im Schnitt dargestellt ist und der dem Rand 14 der Küvette angeformt ist, so dass er das Reaktionsgefäß 4 verschließt. In der FIG 1 ist der Deckel 16 in einer Geschlossenstellung dargestellt.

Der Deckel 16 ist über einen rechtwinkligen Haltearm 19 an einer Welle 20 befestigt. An der Welle 20 ist ein Nocken 24 so angeordnet, dass er in der gezeigten Geschlossenstellung eine senkrechte Kraft auf das Rückstellelement (26) ausübt.

Das Halteelement 18 (hier nicht gezeigt) umfasst eine Biegestabfeder 26, die im Wesentlichen U-förmig ausgestaltet ist, wobei die Biegung des U verstärkt ist. Durch die U-Form wird der Federweg der Biegestabfeder 26 verlängert. Ein Ende der Biegestabfeder 26 ist fest mit dem Halteelement 18 verbunden, während das freie Ende so angeordnet ist, dass es mit der Innenseite des U mit dem Nocken 24 wechselwirken kann. Wird der Deckel 16 nur leicht geöffnet, neigt sich der Nocken 24, wodurch die Biegestabfeder 26 ausgelenkt wird und so eine Rückstellkraft in Richtung der geschlossenen Position bewirkt.

Das Halteelement 18 umfasst eine Mehrzahl solcher Biegestabfedern 26, die analog der beschriebenen Aufnahme 2 für die übrigen Aufnahmen 2 des Segments 8 angeordnet sind. Halteelement 18 und Biegestabfedern 26 sind einteilig als Kunststoff-Spritzgussteil gefertigt. In FIG 1 sind jedoch an den übrigen Aufnahmen 2 keine Deckel 16 angeordnet.

FIG 2 zeigt eine Aufsicht der Aufnahme 2 mit geschlossenem Deckel 16. Rechts und links der mittig gezeigten Aufnahme 2 sind Aufnahmen 2 mit offenem Deckel 16 gezeigt. In der offenen Position ist der Deckel 16 um 90° in Richtung des Mittelpunkts des Kreisbogens des Segments 8 geklappt. An der über den Haltearm 19 mit dem Deckel 16 verbundenen Welle 20, die die Drehachse bildet, sind nach außen gerichtete, zylindrische Stege 28 angeordnet. Die Stege 28 sind in Lagern 30 des Halteelements 18 drehbar gelagert. Die Lager 30 sind dabei zum Mittelpunkt des Kreisbogens des Segments 8 hin offen, jedoch werden die Stege 28 durch die Kraft der Biegestabfeder 26 in den Lagern 30 gehalten.

Die Kombination von FIG 1 und FIG 2 verdeutlicht die zweifach rückstellende Wirkung der Biegestabfeder 26: In der geschlossenen Position wird wie bereits beschrieben eine Rückstellwirkung auf den Nocken 24 ausgeübt, die zudem über den Haltearm 19 für den notwendigen Anpressdruck des Deckels 16 auf den Rand 14 sorgt und so das Reaktionsgefäß 4 sicher verschließt. Wird der Deckel 16 durch Drehung in der Drehachse entgegen der Rückstellkraft geöffnet, gibt die Biegestabfeder 26 nach. Das Maximum der Auslenkung der Biegestabfeder 26 wird bei einer Drehung um 45° erreicht, wenn die abgerundete Spitze des Nockens 24 in Richtung des Mittelpunkts des Kreisbogens des Segments 8 weist.

Wird die Drehung in Richtung der Offenstellung weitergeführt, wirkt die Kraft der Biegestabfeder 26 nicht mehr in Richtung der geschlossenen Position, sondern in Richtung der offenen Position. Eine weitere Kraftausübung ist nicht mehr erforderlich, da der Deckel 16 ab diesem Zeitpunkt selbsttätig in die offene Position klappt. Der umgekehrte Schließvorgang verläuft analog.

Die Betätigung des Deckels 16 erfolgt über einen geraden Hebel 32, der am Ende eines der Stege 28, also an einem Ende der Welle 20, mittig befestigt ist und dessen Arme sich beiderseits der Drehachse erstrecken. Der Hebel 32 ist um 45° gegenüber der Einführ- und Entnahmerichtung der Aufnahme 2 angeordnet und derart ausgerichtet, dass eine Betätigung des Deckels 16 von oben erfolgen kann. Das heißt durch Druck auf einen der Hebelarme nach unten kann jeweils die eine oder die andere Position des Deckels 16 erreicht werden. Hier liegt der dem Mittelpunkt des Kreisbogens des Segments 8 zugewandte bzw. der bezüglich der Drehachse dem Deckel 16 abgewandte Hebelarm in der geschlossenen Position oben.

Die Betätigung des Deckelöffnungsmechanismus erfolgt nun durch den in FIG 2 gezeigten Bolzen 34. Der Bolzen 34 kann beispielsweise direkt an einem Greifarm oder einer Pipettiereinrichtung des automatischen Analysegeräts befestigt sein, so dass die Betätigung mit der ohnehin bereits vorhandenen Auf- und Abbewegung integriert erfolgt. Der Bolzen 34 muss dazu lediglich über einen der beiden Hebelarme des Hebels 32 gebracht werden und nach unten geführt werden. Hierbei besteht eine gewisse Toleranz hinsichtlich der Positionierung, da durch die selbstrückstellende Wirkung der Biegestabfeder 26 die Position des Deckels 16 exakt immer entweder offen oder geschlossen ist. Der Bolzen 34 muss also nicht so weit nach unten gebracht werden, dass der Hebel 32 die der offenen oder geschlossenen Deckelposition entsprechende Lage erreicht.

FIG 2 zeigt den Bolzen 34 nach der Betätigung des Verschlusssystems 1 in Richtung der geschlossenen Position.

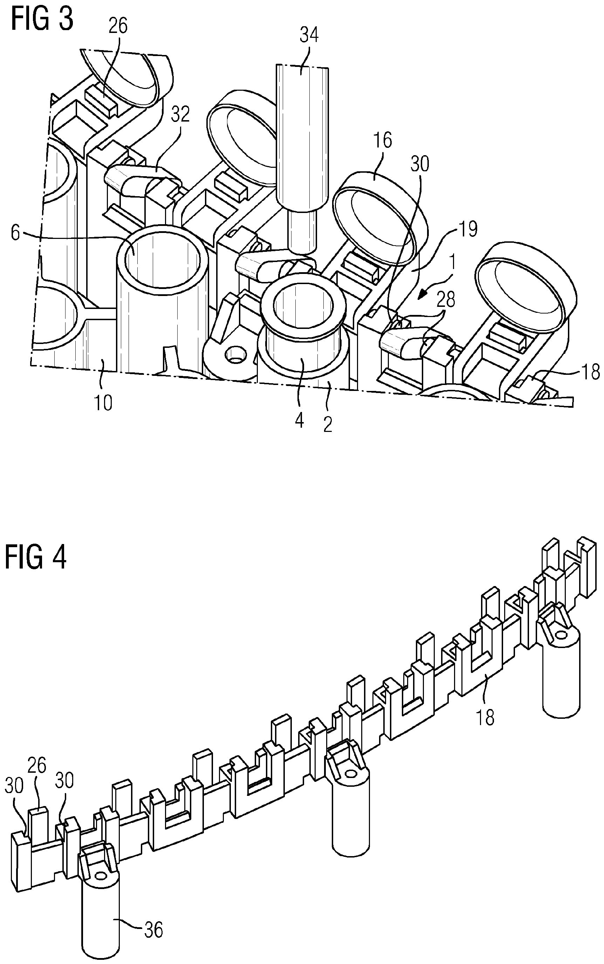

FIG 3 zeigt die Vorrichtung aus FIG 2 nach der Betätigung des Verschlusssystems 1 in Richtung der offenen Position. Der Bolzen 34 wurde über den bezüglich der Drehachse dem Deckel 16 abgewandten Hebelarm gebracht und nach unten geführt.

FIG 4 zeigt das Halteelement 18 ohne Deckel 16 und vor der Montage am Segment 8. Das Halteelement 18 ist als Spritzgussteil aus Kunststoff gefertigt und weist in Kreisbogenform angeordnete Lager 30 und Biegestabfedern 26 in beschriebener Form auf. Weiterhin umfasst sie drei hohlzylinderförmige, regelmäßig angeordnete Befestigungsteile 36 zur Befestigung des Halteelements 18 am Segment 8. Die Deckel 16 können bedarfsweise an dem Halteelement 18 befestigt werden.

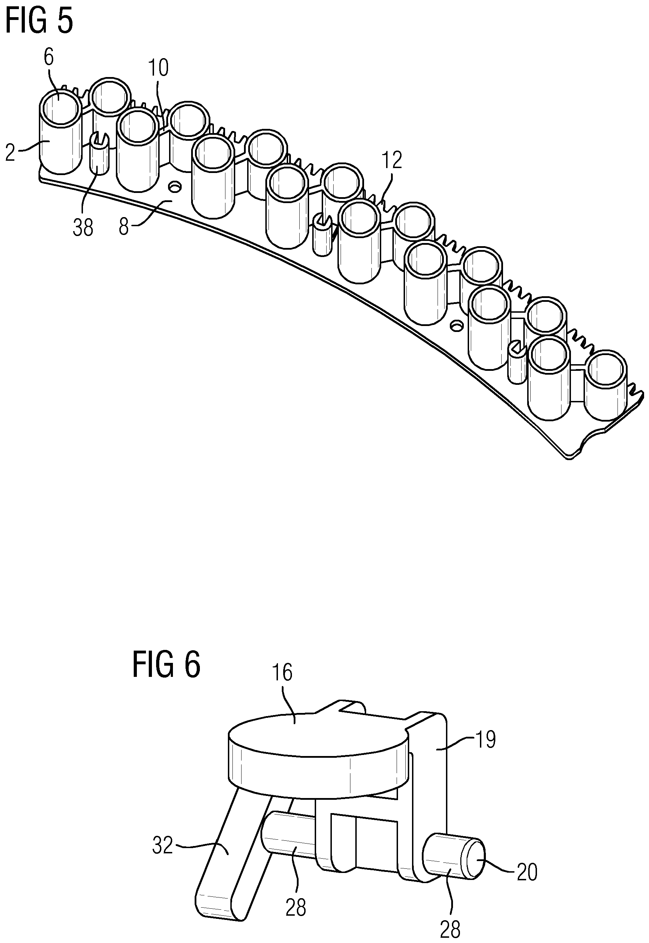

FIG 5 zeigt das bereits beschriebene Segment 8 mit den Aufnahmen 2 ohne Halteelement 18 und ohne Verschlusssystem 1. Das Segment 8 weist zu den Befestigungsteilen 36 des Halteelements 18 passende Bolzen 38 auf. Die Befestigungsteile 36 werden über die Bolzen 38 geschoben und fixiert, so dass Halteelement 18 und Segment 8 fest verbunden sind.

FIG 6 zeigt eine Vorderansicht des den Deckel 16 umfassenden Teils des Verschlusssystems 1. Es umfasst den Deckel 16 und den zweiteilig ausgeführten Haltearm 19. Weiterhin umfasst das in FIG 6 dargestellte Teil die Welle 20 mit den endständigen Stegen 28 zur drehbaren Lagerung sowie den Hebel 32 zur Betätigung des Deckels 16.

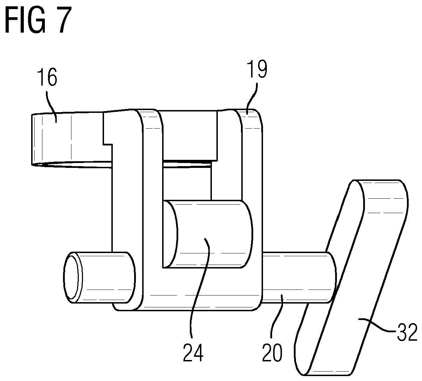

FIG 7 zeigt eine Rückansicht des den Deckel 16 umfassenden Teils des Verschlusssystems 1. In dieser Ansicht ist insbesondere der Nocken 24 an der Welle 20 gut zu erkennen.

### BEZUGSZEICHENLISTE

- 1: Verschlusssystem
- 2: Aufnahme
- 4: Reaktionsgefäß
- 6: Öffnung
- 8: Segment
- 10: Steg
- 12: Zahnkranz
- 14: Rand
- 16: Deckel
- 18: Halteelement
- 19: Haltearm
- 20: Welle
- 24: Nocken
- 26: Biegestabfeder
- 28: Steg
- 30: Lager
- 32: Hebel
- 34: Bolzen
- 36: Befestigungsteil
- 38: Bolzen

## Patentansprüche

1. Verschlusssystem (1) für eine Aufnahme (2) für ein Reaktionsgefäß (4) in einem automatischen Analysegerät, umfassend
- einen an einem Halteelement (18) um eine Achse bewegbar befestigten Deckel (16), wobei der Deckel (16) eine Öffnung (6) der Aufnahme (2) in einer Geschlossenstellung verschließt und in einer Offenstellung freigibt, und
- ein Rückstellelement, welches derart ausgestaltet ist, dass es abhängig von der Stellung des Deckels (16) eine Rückstellkraft in Richtung der Geschlossenstellung oder der Offenstellung ausübt, wobei die Achse, um die der Deckel (16) bewegbar ist, aus einer Welle (20) besteht, mit der der Deckel (16) verbunden ist, wobei an mindestens einem Ende der Welle (20) ein sich beiderseits der Achse radial erstreckender Hebel (32) angebracht ist, wobei ein Nocken (24) so an der Welle (20) angeordnet ist, dass er in der Geschlossenstellung eine senkrechte Kraft auf das Rückstellelement ausübt und wobei das Rückstellelement als Biegestabfeder (26) ausgelegt ist, **dadurch gekennzeichnet, dass** die Biegestabfeder (26) U-förmig ausgestaltet ist, wobei ein Ende der Biegestabfeder (26) mit dem Halteelement (18) fest verbunden ist, während das freie Ende so angeordnet ist, dass es mit dem Nocken (24) wechselwirken kann, so dass, wenn der Deckel nur leicht geöffnet wird, der Nocken (24) sich neigt, wodurch die Biegestabfeder (26) ausgelenkt wird und so eine Rückstellkraft in Richtung der geschlossenen Position bewirkt.

2. Verschlusssystem (1) nach Anspruch 1, bei dem die Offenstellung durch Drehung des Deckels um die Achse um einen Winkel, vorzugsweise um einen Winkel von 90°, aus der Geschlossenstellung erreicht wird.

3. Verschlusssystem (1) nach dem Anspruch 2, bei dem der Winkel 90° beträgt.

4. Verschlusssystem (1) nach einem der vorhergehenden Ansprüche, bei dem der Hebel (32) derart angeordnet ist, dass er mit einer Einführ- und Entnahmerichtung der Aufnahme (2) einen Winkel von 45° bildet.

5. Haltevorrichtung mit einer Vielzahl von Aufnahmen (2) für Reaktionsgefäße (4) **dadurch gekennzeichnet, dass** an jeder Aufnahme ein Verschlusssystem (1) gemäß einem der vorhergehenden Ansprüche angeordnet ist.

6. Automatisches Analysegerät mit einer Haltevorrichtung mit einer Vielzahl von Aufnahmen (2) für Reaktionsgefäße (4) gemäß Anspruch 5 und mit einer Pipettiervorrichtung mit einer Hohlnadel und/oder mit einer Greifvorrichtung und mit einem Bolzen (34) zur Betätigung eines Verschlusssystems gemäß einem der Ansprüche 1 bis 4.

## Claims

1. Closure system (1) for a holder (2) for a reaction vessel (4) in an automatic analysis apparatus, said closure system (1) comprising
- a lid (16) secured movably about an axis on a retainer element (18), wherein the lid (16) closes an opening (6) of the holder (2) in a closed position and opens it in an open position, and
- a restoring element, which is designed in such a way that, depending on the position of the lid (16), it exerts a restoring force in the direction of the closed position or of the open position, wherein the axis about which the lid (16) is movable is in the form of a shaft (20) to which the lid (16) is connected, wherein a lever (32), which extends radially on both sides of the axis, is mounted on at least one end of the shaft (20), wherein a cam (24) is arranged on the shaft (20) such that, in the closed position, it exerts a vertical force on the restoring element and wherein the restoring element is designed as a flexural beam spring (26), **characterized in that** the flexural beam spring (26) is U-shaped, wherein one end of the flexural beam spring (26) is connected fixedly to the retainer element (18), while the free end is arranged such that it can interact with the cam (24) such that, if the lid is opened only slightly, the cam (24) inclines, as a result of which the flexural beam spring (26) is deflected and thus exerts a restoring force in the direction of the closed position.

2. Closure system (1) according to Claim 1, in which the open position is reached by rotating the lid about the axis by an angle, preferably by an angle of 90°, from the closed position.

3. Closure system (1) according to Claim 2, in which the angle is 90°.

4. Closure system (1) according to one of the preceding claims, in which the lever (32) is arranged in such a way that it forms an angle of 45° with a direction of insertion and removal of the holder (2).

5. Retaining device with a multiplicity of holders (2) for reaction vessels (4), **characterized in that** a closure system (1) according to one of the preceding claims is arranged on each holder.

6. Automatic analysis apparatus having a retaining device with a multiplicity of holders (2) for reaction vessels (4) according to Claim 5, and having a pipetting device with a hollow needle and/or a gripping device, and having a bolt (34) for actuating a closure system according to one of Claims 1 to 4.

## Revendications

1. Système (1) de fermeture d'un logement d'un récipient (4) de réaction dans un appareil d'analyse automatique, comprenant
- un couvercle (16) fixé, de manière mobile autour d'un axe, à un élément (18) de retenue, le couvercle (16) fermant une ouverture (6) du logement (2) dans une position fermée et la dégageant dans une position ouverte, et
- un élément de rappel, conformé de manière à appliquer, en fonction de la position du couvercle (16), une force de rappel dans le sens de la position fermée ou de la position ouverte, l'axe, autour duquel le couvercle (16) est mobile, étant constitué d'un arbre (20), auquel le couvercle (16) est relié, dans lequel, à au moins un bout de l'arbre (20), est monté un levier (32) s'étendant radialement des deux côtés de l'axe, une came (24) étant montée sur l'axe, de manière à appliquer, dans la position fermée, une force perpendiculaire à l'élément de rappel et l'élément de rappel étant conçu sous la forme d'un ressort (26) à barreau de flexion, **caractérisé en ce que** le ressort (26) à barreau de flexion est conformé en U, une extrémité du ressort (26) à barreau de flexion étant reliée fixement à l'élément (18) de retenue, tandis que l'extrémité libre est disposée de manière à pouvoir interagir avec la came (24), de sorte que, si le couvercle n'est ouvert que légèrement, la came (24) s'incline, grâce à quoi le ressort (26) à barreau de flexion est dévié et provoque ainsi une force de rappel dans le sens de la position fermée.

2. Système (1) de fermeture suivant la revendication 1, dans lequel la position ouverte est obtenue par une rotation du couvercle autour de l'axe d'un angle, de préférence d'un angle de 90°, à partir de la position fermée.

3. Système (1) de fermeture suivant la revendication 2, dans lequel l'angle est de 90°.

4. Système (1) de fermeture suivant l'une des revendications précédentes, dans lequel le levier (32) est monté de manière à faire un angle de 45° avec une direction d'entrée dans le logement (2) et de prélèvement du logement (2).

5. Dispositif de retenue, comprenant une pluralité de logements (2) de récipient (4) de réaction, **caractérisée en ce qu'**un système (1) de fermeture suivant l'une des revendications précédentes est disposé sur chaque logement.

6. Appareil d'analyse automatique, comprenant une installation de retenue ayant une pluralité de logements (2) de récipients (4) de réaction suivant la revendication 5 et comprenant un dispositif de pipettage ayant une aiguille creuse et/ou un dispositif de préhension et ayant un axe (34) d'actionnement d'un système de fermeture suivant l'une des revendications 1 à 4.
